# EUROPÄISCHE PATENTSCHRIFT

(11) **EP 0 813 021 B1**
(45) Veröffentlichungstag und Bekanntmachung des Hinweises auf die Patenterteilung: **25.04.2001**
(21) Anmeldenummer: 97109148.3
(22) Anmeldetag: 05.06.1997
(51) Int. Cl.: F16M 11/32

(54) **Teleskopstativ**
Telescopic support
Support téléscopique

(30) Priorität: 07.06.1996 DE 19622894
(43) Veröffentlichungstag der Anmeldung: 17.12.1997
(73) Patentinhaber: Sachtler AG, 85716 Unterschleissheim (DE)
(72) Erfinder: Hein, Dieter, 81377 München (DE); Jaumann, Leonhard, 80895 München (DE)
(74) Vertreter: Görg, Klaus, Dipl.-Ing.

(56) Entgegenhaltungen:
- WO-A-93/12372
- DE-A- 2 647 664
- GB-A- 1 127 497
- US-A- 4 767 090
- US-A- 4 932 622

## Beschreibung

Die Erfindung bezieht sich auf ein Teleskopstativ mit mindestens einem Stativbein, das mindestens drei Teleskopeinheiten und mindestens zwei in Längserstreckung des Stativs beabstandete Feststellorte aufweist, an denen die Teleskopeinheiten verschiebbar und durch Feststelleinrichtungen zueinander vorzugsweise stufenlos verstellbar sind, wobei von einer Stativschale her auf der ersten Teleskopeinheit eine Traverse längs bewegbar ist, die mit dem Anfang der zweiten Teleskopeinheit starr verbunden ist, wobei mit dem Ende dieser zweiten Teleskopeinheit eine weitere Traverse starr verbunden ist, in der eine weitere Teleskopeinheit längs bewegbar ist, wobei die Traversen die Feststellorte bilden.

Ein derartiges Teleskopstativ ist aus der WO 93/12372 bekannt. Bei üblicherweise zwei Feststellorten pro Stativbein und einem dreibeinigen Stativ waren üblicherweise sechs Feststellhebel vorgesehen. Wenn bspw. die Teleskopbeine vollständig eingeschoben und in diesem Zustand verriegelt sind, so hat man alle Feststellhebel gelöst, so daß die Stativbeine im wesentlichen durch das Eigengewicht teleskopisch ausgefahren sind. Um dann selektive Verstellungen vorzunehmen, mußte man die Vielzahl von Feststellhebeln auf verschiedenen Niveaus betätigen, wobei man insbesondere die unteren Hebel nur durch weites nach unten Bücken verstellen konnte.

Es ist Aufgabe der vorliegenden Erfindung, ein Teleskopstativ zu schaffen, welches hinsichtlich der Aufstellung und der Verstellungen wesentlich einfacher zu bedienen ist.

Diese Aufgabe wird erfindungsgemäß dadurch gelöst, daß mindestens zwei Feststelleinrichtungen der Feststellorte durch eine Koppel-Betätigungsstange miteinander verbunden sind und an einem der Feststellorte und vorzugsweise an dem obersten Feststellort die Koppel-Betätigungsstange mit einem Betätigungshebel verbunden ist.

Durch diese Lösung kann die Anzahl der Betätigungshebel erheblich reduziert und somit die Bedienung wesentlich vereinfacht werden, wobei es sich als vorteilhaft herausstellt, daß durch die Anordnung des Betätigungshebels am oberen Feststellort die Handhabung dahingehend wesentlich vereinfacht wird, daß sich die Bedienungsperson nicht zu tief bücken muß, um eine Verstellung vorzunehmen. Diese verblüffend einfache Lösung ermöglicht sich durch die Erkenntnis, daß der Abstand zwischen zwei Traversen gleich bleibt und daher eine derartige Koppel-Betätigungsstange überhaupt angebracht werden kann, um über diese Koppel-Betätigungsstange durch einen Betätigungshebel zwei Feststellorte gleichzeitig zu bedienen.

Gemäß einer weiteren Ausgestaltung der Erfindung ist die Koppel-Betätigungsstange als Torsionsstab ausgebildet, der im Bereich der Feststellorte mit jeweils einem Exzenter verbunden ist, der mindestens ein Klemmglied betätigt.

Dabei kann die Koppel-Betätigungsstange außerhalb von Teleskopstangen der zweiten Teleskopeinheit angeordnet sein, was den konstruktiven Aufbau und die Herstellung wesentlich vereinfacht. Es besteht aber auch die Möglichkeit, die Koppel-Betätigungsstange innerhalb einer Teleskopstange der zweiten Teleskopeinheit anzuordnen.

Zweckmäßigerweise weist zumindest der Exzenter, an dem der Betätigungshebel angeordnet ist, einen Raststellungsabschnitt auf, so daß durch eine Totpunktüberwindung eine Verriegelung der Feststellung erfolgen kann.

Die Erfindung wird nachfolgend anhand eines in den Zeichnungen rein schematisch dargestellten Ausführungsbeispiels erläutert. Es zeigen:
- Fig. 1a: eine teilweise geschnittene Ansicht eines Stativbeines eines dreibeinigen Stativs im teilweise eingefahrenen Zustand;
- Fig. 1b: eine entsprechende teilgeschnittene Seitenansicht dieses Stativbeines;
- Fig. 2: eine leicht vergrößerte Schnittansicht der Einzelheit A in Fig. 1b;
- Fig. 3: eine leicht vergrößerte Ansicht der Einzelheit B in Fig. 1b;
- Fig. 4a: eine Schnittansicht entlang der Linie IV-IV in Fig. 1b im geklemmten Zustand; und
- Fig. 4b: eine der Fig. 4a entsprechende Schnittansicht im gelösten Zustand.

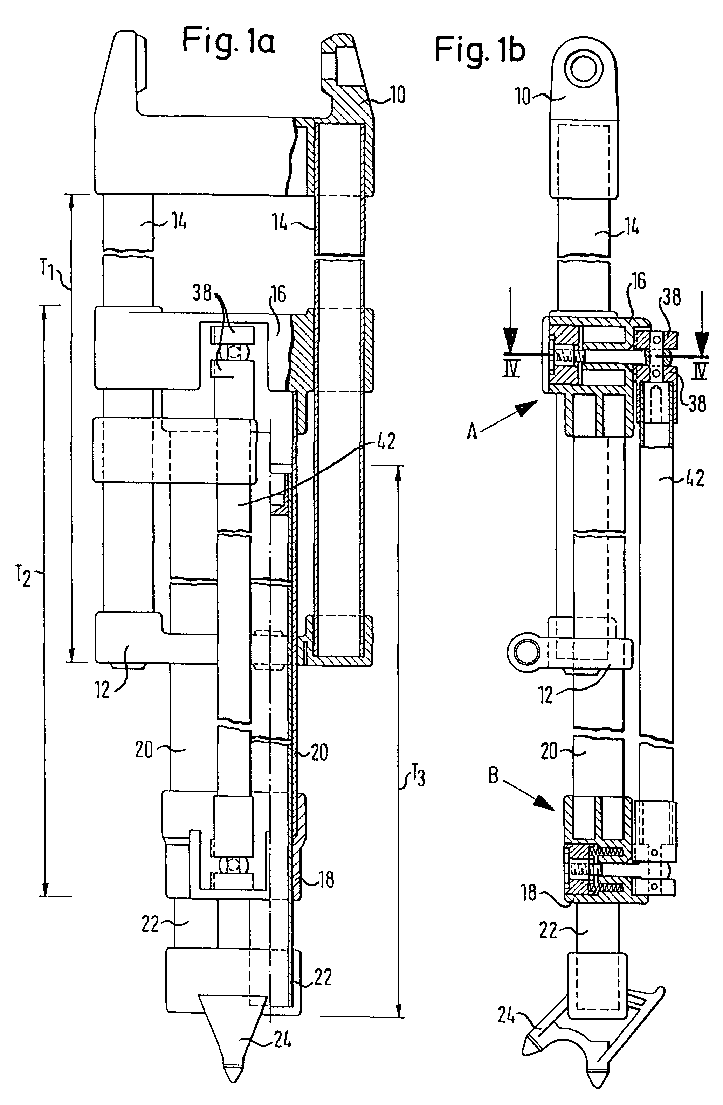

Das in Fig. 1a und 1b dargestellte Stativbein besteht im wesentlichen aus drei Teleskopeinheiten T₁, T₂ und T₃. Dabei besteht die Teleskopeinheit T₁ aus einem Verbindungsstück 10, einem Flachschieber 12 und zwei diese im Abstand zueinander verbindenden Teleskoprohren 14. Auf diesen Teleskoprohren gleitet eine Traverse 16 als Klemmstück und als Anfangsstück der zweiten Teleskopeinheit T₂. Das Ende dieser Teleskopeinheit T₂ wird gebildet von einer weiteren Traverse 18. Verbunden sind die beiden Traversen 16, 18 im Abstand zueinander durch zwei zum Beispiel hohle Teleskopstangen 20. Somit gleitet diese zweite Teleskopeinheit T₂ mit der Traverse 16 auf den Teleskoprohren 14 und in dem Flachschieber 12 der ersten Teleskopeinheit T₁. In den Teleskoprohren 20 der zweiten Teleskopeinheit T₂ gleitet jeweils ein Teleskoprohr 22 der dritten Teleskopeinheit T₃, die am äußersten Ende in einem Fußstück 24 sitzt. Die Teleskoprohre 22 durchragen dabei die Traverse 18 durch entsprechende Öffnungen, in denen die Teleskoprohre 22 in der Traverse 18 festklemmbar sind, um die Relativposition zwischen der zweiten Teleskopeinheit T₂ und der dritten Teleskopeinheit T₃ sicherzustellen. Die Teleskoprohre 14 sind in der Traverse 16 festklemmbar, um die Relativstellung zwischen der ersten Teleskopeinheit T₁ und der zweiten Teleskopeinheit T₂ ein- und festzustellen. Dabei ist die zweite Teleskopeinheit T₂ in ihrer Länge konstant und die Verlängerung oder Verkürzung der Stativbeine erfolgt über die Teleskopeinheiten T₁ und T₂.

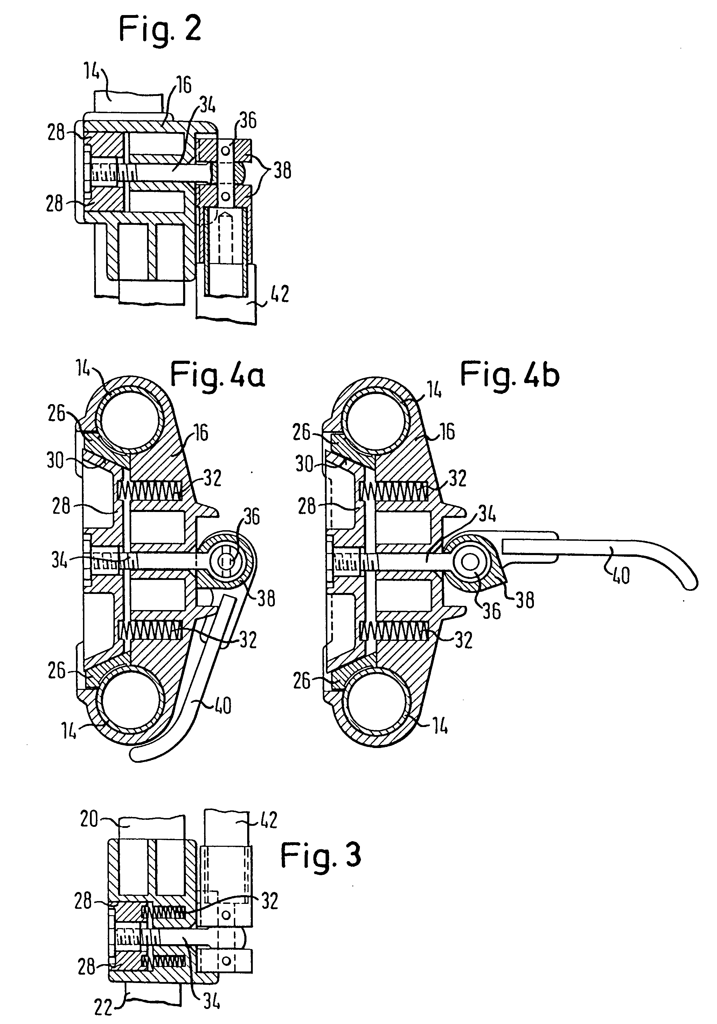

Der genauere Aufbau der als Klemmstücke ausgebildeten Traversen 16 und 18 ergibt sich am Beispiel der Traverse 16 in Fig. 4a und 4b. Die Umfassung der Teleskopstangen 14 durch die Traverse 16 läßt nahezu ein Viertel des Kreisumfangs frei, so daß dort jeweils ein Klemmglied 26 angreifen kann. An der dem Teleskoprohr 14 abgewandten Seite des Klemmgliedes 26 befindet sich ein Klemmorgan 28 mit einer Wirkfläche 30, die in einer korrespondierenden, komplementären Schrägfläche des Klemmgliedes 26 derart zusammenwirken kann, daß das Klemmglied 26 in Anlage an den Außenumfang der Teleskopstangen 14 drückbar ist. Normalerweise wird dieses Klemmorgan 28 durch Federn 32 so beaufschlagt, daß die vorgenannten Wirkflächen nicht aufeinander einwirken und somit das Klemmglied 26 derartig von der Teleskopstange 14 gelöst ist, daß die Traverse 16 frei entlang der Teleskopstangen 14 bewegbar ist. Das Betätigungsorgan betätigt zugleich die Klemmglieder für das Festklemmen der Traverse an beide Teleskopstangen 14. Hierzu wird gegen die Kraft der Federn 32 das Klemmorgan 28 durch eine Zugstange 34 betätigt. Am dem Klemmorgan 28 entgegengesetzten Ende der Zugstange 34 sitzt auf einem Zapfen 36 ein Exzenter 38, der mit einem Klemmhebel 40 verbunden ist. Die in der Zapfenmitte liegende Schwenkachse des Klemmhebels 40 liegt in diesem Ausführungsbeispiel senkrecht zur Längsachse der Zugstange 34 und parallel zu den Längsachsen der Teleskopstangen 14. In der Stellung des Klemmhebels 40 in Fig. 4a erfolgt die Klemmung. Bei der Stellung des Klemmhebels 40 in Fig. 4b ist die Klemmung aufgehoben. Bevor der Exzenter 38 in die in Fig. 4a dargestellte Endstellung in Anlage an der Traverse 16 gelangt, überwindet der Exzenter einen Totpunkt dahingehend, daß durch Überwindung dieses Totpunktes die in Fig. 4a dargestellte Klemmstellung verrastet ist, so daß auch bei Stößen auf das Stativbein sich die Klemmung nicht von selbst lösen kann.

Die beiden Exzenter 38, von denen sich je einer an der Traverse 16 und einer an der Traverse 18 befindet, sind beispielsweise durch einen Torsionsstab 42 fester Länge miteinander verbunden, so daß bei der Betätigung des Klemmhebels 40 beide Klemmungen gleichzeitig vorgenommen werden. Beim Ausführungsbeispiel befindet sich dieser Torsionsstab 42 außerhalb der Teleskopstangen, er könnte auch innerhalb der Teleskopstangen 20 angeordnet sein.

Die zuvor beschriebenen Einzelheiten ergeben sich in etwas vergrößerter Darstellung auch aus den Teildarstellungen A und B in Fig. 2 und Fig. 3.

Wenn sich das Stativ im eingefahrenen Zustand befindet, so müssen an oberster Stelle nur drei Klemmhebel gelöst werden, damit die Teleskopbeine ausfahren können. Die Feststellung der Teleskopeinheiten der Stativbeine erfolgt dann wiederum durch Betätigung von nur drei Klemmhebeln. Wenn eine selektive Verstellung an den unterschiedlichen Stativbeinen erfolgen soll, so kann dies an relativ hochliegender Stelle durch die genannten Klemmhebel leicht erfolgen.

Die Erfindung ist natürlich auf dieses Ausführungsbeispiel nicht beschränkt. So kann natürlich die Verbindung der Funktionen anstatt über einen Torsionsstab auch über eine andere Kinematik erfolgen, beispielsweise einen Seilzug oder einen Kettenzug.

## Patentansprüche

1. Teleskopstativ mit mindestens einem Stativbein, das mindestens drei Teleskopeinheiten (T₁, T₂, T₃) und mindestens zwei in Längserstreckung des Stativs beabstandete Feststellorte (A, B) aufweist, an denen die Teleskopeinheiten (T₁, T₂, T₃) verschiebbar und durch Feststelleinrichtungen zueinander vorzugsweise stufenlos verstellbar sind, wobei von einer Stativschale her auf der ersten Teleskopeinheit (T₁) eine Traverse (16) längs bewegbar ist, die mit dem Anfang der zweiten Teleskopeinheit (T₂) starr verbunden ist, wobei mit dem Ende dieser zweiten Teleskopeinheit (T₂) eine weitere Traverse (18) starr verbunden ist, in der eine weitere Teleskopeinheit (T₃) längs bewegbar ist, wobei die Traversen (16, 18) die Feststellorte (A, B) bilden,
dadurch **gekennzeichnet,**
daß die mindestens zwei Feststelleinrichtungen der Feststellorte (A, B) durch ein Koppel-Betätigungselement (42) miteinander verbunden sind und vorzugsweise an den obersten Feststellorten (A) das Koppel-Betätigungselement (42) mit einem Klemmhebel (40) verbunden ist.

2. Teleskopstativ nach Anspruch 1,
dadurch **gekennzeichnet,**
daß das Koppel-Betätigungselement eine Koppel-Betätigungsstange(42) ist.

3. Teleskopstativ nach Anspruch 2,
dadurch **gekennzeichnet,**
daß die Koppel-Betätigungsstange (42) als Torsionsstab ausgebildet ist, der im Bereich der Feststellorte (A, B) mit jeweils einem Exzenter (38) verbunden ist, der mindestens ein Klemmglied (28, 26) betätigt.

4. Teleskopstativ nach Anspruch 1,
dadurch **gekennzeichnet,**
daß das Koppel-Betätigungselement (42) außerhalb von Teleskopstangen (20) der zweiten Teleskopeinheit (T₂) angeordnet ist.

5. Teleskopstativ nach Anspruch 1,
dadurch **gekennzeichnet,**
daß das Koppel-Betätigungselement (42) innerhalb einer Teleskopstange (20) der zweiten Teleskopeinheit (T₂) angeordnet ist.

6. Teleskopstativ nach Anspruch 3,
dadurch **gekennzeichnet,**
daß zumindest der Exzenter (38), an dem der Klemmhebel (40) angeordnet ist, einen Raststellungsabschnitt für Totpunktüberwindung aufweist.

## Claims

1. Telescope stand with at least one stand leg that has at least three telescope units (T₁, T₂, T₃) and at least two locking positions (A, B) set at a distance in the longitudinal extension of the stand, on which locking positions the telescope units (T₁, T₂, T₃) are displaceable and preferably continuously adjustable to each other by means of locking devices, wherein from one stand shell on the first telescope unit (T₁) a cross-member (16) that is rigidly connected to the start of the second telescope unit (T₂) is longitudinally movable, wherein a further cross-member (18), in which a further telescope unit (T₃) is longitudinally movable, is rigidly connected to the end of this second telescope unit (T₂), wherein the cross-members (16, 18) form the locking positions (A, B), characterised in that the at least two locking devices of the locking positions (A,B) are connected to each other by means of a couple actuating element (42) and preferably on the topmost locking position (A) the couple actuating element (42) is connected to a clamping lever (40).

2. Telescope stand according to claim 1, characterised in that the coupling actuating element is a coupling actuating rod (42).

3. Telescope stand according to claim 2, characterised in that the coupling actuating element (42) is configured as a torsion bar that is connected in the area of the locking positions (A, B) in each case with an eccentric (38), which actuates at least one clamping member (28, 26).

4. Telescope stand according to claim 1, characterised in that the coupling actuating element (42) is arranged outside telescope rods (20) of the second telescope unit (T₂) .

5. Telescope stand according to claim 1, characterised in that the coupling actuating element (42) is arranged inside a telescope rod (20) of the second telescope unit (T₂) .

6. Telescope stand according to claim 3, characterised in that at least the eccentric (38) on which the clamping lever (40) is arranged has a lock-in position section for surmounting dead centre.

## Revendications

1. Support télescopique muni d'au moins un pied support, présentant au moins trois ensembles télescopiques (T₁, T₂, T₃) et au moins deux points de fixation (A, B), espacés dans la direction longitudinale du support, auxquels les ensembles télescopiques (T₁, T₂, T₃) sont déplaçables et réglables de préférence de façon progressive continue l'un par rapport à l'autre au moyen de dispositifs de blocage, une traverse (16), qui est reliée rigidement à l'amorce du deuxième ensemble télescopique (T₂), est déplacable longitudinalement depuis une coque de pied sur le premier ensemble télescopique (T₁), une autre traverse (18), dans laquelle un autre ensemble télescopique (T₃) est déplacable longitudinalement, étant reliée rigidement à l'extrémité de ce deuxième ensemble télescopique (T₂), les traverses (16, 18) constituant les points de fixation (A, B), caractérisé en ce que les au moins deux dispositifs de fixation des points de fixation (A, B) sont reliés ensemble, au moyen d'un élément d'actionnement couplé (42), et l'élément d'actionnement couplé (42) étant relié à un levier de serrage (40), de préférence sur les points de fixation les plus hauts (A) .

2. Support télescopique selon la revendication 1, caractérisé en ce que l'élément d'actionnement couplé est une tige d'actionnement couplé (42).

3. Support télescopique selon la revendication 2, caractérisé en ce que la tige d'actionnement couplé (42) est réalisée sous la forme de barre de torsion reliée, dans la zone des points de fixation (A, B), chaque fois à un excentrique (38) qui actionne au moins un organe de serrage (28, 26).

4. Support télescopique selon la revendication 1, caractérisé en ce que l'élément d'actionnement couplé (42) est disposé à l'extérieur de tiges télescopiques (20) du deuxième ensemble télescopique (T₂).

5. Support télescopique selon la revendication 1, caractérisé en ce que l'élément d'actionnement couplé (42) est disposé à l'intérieur d'une tige télescopique (20) du deuxième ensemble télescopique (T₂).

6. Support télescopique selon la revendication 3, caractérisé en ce qu'au moins l'excentrique (38), sur lequel le levier de serrage (40) est disposé, présente un tronçon à positions d'encliquetage afin de dépasser le point mort.
